# EUROPÄISCHE PATENTSCHRIFT

(11) **EP 4 334 695 B1**
(45) Veröffentlichungstag und Bekanntmachung des Hinweises auf die Patenterteilung: **21.01.2026**
(21) Anmeldenummer: 22738598.6
(22) Anmeldetag: 24.06.2022
(51) Int. Cl.: G01L 19/00, F16L 41/00, B21J 5/06

(54) **VERFAHREN ZUM ANBRINGEN EINER MESSEINRICHTUNG AN EINEM ROHR**
METHOD FOR FITTING A MEASURING DEVICE ON A TUBE
PROCÉDÉ DE MONTAGE D'UN DISPOSITIF DE MESURE SUR UN TUBE

(30) Priorität: 09.07.2021 DE 102021207261
(43) Veröffentlichungstag der Anmeldung: 13.03.2024
(73) Patentinhaber: Siemens Mobility GmbH, 80997 München (DE)
(72) Erfinder: LEITEL, Holger, 82049 Pullach (DE); SCHNEBBE, Holger, 47918 Tönisvorst (DE)
(74) Vertreter: Siemens Patent Attorneys
(86) Internationale Anmeldenummer: PCT/EP2022/067338
(87) Internationale Veröffentlichungsnummer: WO 2023/280595

(56) Entgegenhaltungen:
- DE-T5- 112019 001 107
- US-A- 2 991 551
- US-A- 3 178 944
- US-A- 5 971 001

## Beschreibung

Verfahren zum Anbringen einer Messeinrichtung an einem Rohr Die Erfindung bezieht sich auf ein Verfahren zum nachträglichen Anbringen einer Messeinrichtung an einem Rohr einer Fluidleitung eines Fahrzeugs, insbesondere Schienenfahrzeugs.

Im Bereich der Schienenfahrzeugtechnik, insbesondere im Zusammenhang mit Güterzugwaggons, stellt sich das Problem, bereits fertiggestellte bzw. in Betrieb genommene Schienenfahrzeuge nachträglich mit Luftdruckmesseinrichtungen zur Überwachung des Luftdrucks des Druckluftbremssystems auszustatten. Problematisch ist in diesem Zusammenhang der nur geringe zur Verfügung stehende Raum für die durchzuführenden Arbeitsschritte als auch der Sicherheitsaspekt, dass ein Verschmutzen der Druckluftleitung bzw. des Druckluftbremssystems in jedem Falle zu vermeiden ist.

US 3 178 944 A offenbart ein Verfahren zum nachträglichen Anbringen einer Messeinrichtung an einer Fluidleitung eines Schienenfahrzeugs.

US 5 971 001 A offenbart ein Verfahren zum permanenten nachträglichen Anbringen einer Messeinrichtung (32) an einem Rohr (12) einer Fluidleitung.

US 2 991 551 A offenbart ein Verfahren, mittels dessen durch Anschmelzen des Rohrmaterials ein Loch in das Rohr eingebracht werden kann.

Der Erfindung liegt die Aufgabe zugrunde, ein Verfahren zum nachträglichen Anbringen einer Messeinrichtung an einem Rohr einer Fluidleitung eines Fahrzeugs anzugeben, das sich mit geringen Kosten, schnell, aber dennoch ohne Gefährdung der bestehenden Infrastruktur durchführen lässt.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass im Fahrzeug mit einem spanfreien Fließbohrverfahren durch Anschmelzen des Rohrmaterials des Rohres ein Loch in das Rohr eingeschmolzen wird und die Messeinrichtung an das eingeschmolzene Loch angeschlossen wird.

Ein wesentlicher Vorteil des erfindungsgemäßen Verfahrens ist darin zu sehen, dass dieses auf ein Anbohren der Fluidleitung verzichtet, weil stattdessen ein Aufschmelzen bzw. ein Einschmelzen eines Loches vorgenommen wird. Ein Einschmelzen statt eines Aufbohrens weist den großen Vorteil auf, dass keine Späne erzeugt werden, die in das Innere des Rohres der Fluidleitung fallen könnten und das Fluidsystem insgesamt beeinträchtigen oder sogar außer Kraft setzen könnten. Letzterer Aspekt spielt insbesondere dann eine Rolle, wenn beim Herstellen des Loches die Fluidleitung selbst nicht druckbelastet ist, sodass Partikel ohne weiteres in die Fluidleitung fallen würden, sofern dies nicht durch eine gezielte Maßnahme vermieden wird.

Vorteilhaft ist es, wenn zunächst eine Anbohrschelle an dem im Fahrzeug befindlichen Rohr angebracht wird und das Fließbohrverfahren an der durch die Anbohrschelle definierten Stelle durchgeführt wird.

Die Fluidleitung ist vorzugsweise eine Druckluftleitung des Fahrzeugs und das Loch wird vorzugsweise in die Druckluftleitung eingeschmolzen.

Bei der Fluidleitung handelt es sich bevorzugt um eine Druckluftleitung eines Druckluftbremssystems des Fahrzeugs. Als Messeinrichtung wird vorzugsweise eine Luftdruckmesseinrichtung an das Rohr angeschlossen, die beim Betrieb den Luftdruck des Druckluftbremssystems misst.

Das spanfreie Fließbohrverfahren wird vorzugsweise mit einer transportablen Oberfräse hergestellt, indem diese in einem Drehzahlbereich über 10.000 Umdrehungen pro Minute betrieben wird. Eine Drehzahl von 30.000 Umdrehungen pro Minute (± 10%) wird für das spanfreie Fließbohrverfahren als besonders vorteilhaft angesehen.

Die Oberfräse wird beim Betrieb bevorzugt ausschließlich manuell (mit manueller Andrückkraft) ohne zusätzliche Anpresseinrichtung auf das Rohr aufgedrückt.

Zwischen der transportablen Oberfräse und der Anbohrschelle wird vorzugsweise eine Adaptereinrichtung angeordnet, insbesondere dann, wenn eine Öffnung in der Anbohrschelle zum Aufsetzen der Oberfräse allein keine ausreichende Führung für die Oberfräse gewährleisten kann.

Bei einer bevorzugten Ausgestaltung des Verfahrens ist vorgesehen, dass die Adaptereinrichtung an der transportablen Oberfräse unter Bildung einer Oberfräsen-Adapter-Einheit montiert wird und die Oberfräsen-Adapter-Einheit auf die Anbohrschelle, insbesondere deren Befestigungsschrauben, aufgesetzt wird.

Bei der letztgenannten Variante ist es vorteilhaft, wenn die Adaptereinrichtung an der transportablen Oberfräse unter Bildung der Oberfräsen-Adapter-Einheit montiert wird, indem Schrauben durch Löcher in der Adaptereinrichtung hindurchgeführt und in die Oberfräse eingeschraubt werden.

Bei einer anderen bevorzugten Ausgestaltung des Verfahrens ist vorgesehen, dass die Adaptereinrichtung auf die Anbohrschelle, insbesondere auf einen Anbaustutzen der Anbohrschelle, aufgesetzt oder in eine Öffnung der Anbohrschelle, insbesondere in einen Anbaustutzen der Anbohrschelle, eingesetzt wird, bevor die Oberfräse auf die Adaptereinrichtung aufgesetzt wird.

Die Anbohrschelle weist vorzugsweise einen rohrförmigen Anbaustutzen auf, auf den die Adaptereinrichtung aufgesetzt wird.

Die Mittelachse bzw. die Längsrichtung des rohrförmigen Anbaustutzens erstreckt sich vorzugsweise radial nach außen, besonders bevorzugt derart, dass die Rotationsachse des Fräskopfes koaxial zur Mittelachse des rohrförmigen Anbaustutzens ausgerichtet werden kann.

Die Innenwand des rohrförmigen Anbaustutzens ist vorzugsweise mit einem Innengewinde versehen, das ein Einschrauben einer Komponente, wie beispielsweise der Messeinrichtung, ermöglicht.

Der Anbaustutzen hat vorzugsweise eine Doppelfunktion: Zum einen kann er mit seiner Außenwand zum Aufsetzen und Ausrichten der Oberfräse dienen, und zum anderen kann er mit seiner Innenwand zur Aufnahme bzw. Montage der Messeinrichtung herangezogen werden.

Die Messeinrichtung wird vorzugsweise mit der Innenwand des Anbaustutzens verbunden, insbesondere verschraubt.

Die Adaptereinrichtung weist vorzugsweise ein Durchgangsloch auf, dessen Innenkontur zu der Außenkontur bzw. der Außenwand des Anbaustutzens der Anbohrschelle passt und eine Zentrierung der Adaptereinrichtung am Anbaustutzen und damit des Fräskopfes der Oberfräse innerhalb der Öffnung des Anbaustutzens gewährleistet.

Bei einer besonders vorteilhaften Verfahrensvariante ist vorgesehen, dass die Anbohrschelle einen rohrförmigen Anbaustutzen mit einer Außenwand und einer Innenwand aufweist, die Adaptereinrichtung auf den Anbaustutzen aufgesetzt und dabei durch die Außenwand des Anbaustutzens zentriert wird, dabei oder danach der Fräskopf durch den Anbaustutzen hindurch geführt und auf das Rohr aufgesetzt wird und anschließend das Loch eingeschmolzen wird, und die Messeinrichtung nach dem Einschmelzen des Loches in ein Innengewinde in der Innenwand des rohrförmigen Anbaustutzens eingeschraubt wird.

Das Anschmelzen des Rohrmaterials wird vorzugsweise im druckfreien Zustand des Rohres durchgeführt.

Das Rohr ist vorzugsweise ein Metallrohr.

Das Anschmelzen des Rohrmaterials wird vorzugsweise in einem Güterzugwaggon durchgeführt, beispielsweise im Rahmen von Modernisierungsarbeiten zum Anpassen des Güterzugwaggons an neue Standards.

Die Erfindung bezieht sich darüber hinaus auf ein Schienenfahrzeug mit einer Fluidleitung und einer Messeinrichtung. Erfindungsgemäß ist vorgesehen, dass die Messeinrichtung durch ein Verfahren nach einem der Ansprüche 1 bis 13 nachträglich an einem Rohr der Fluidleitung angebracht ist.

Bezüglich der Vorteile des erfindungsgemäßen Schienenfahrzeugs und vorteilhafter Ausgestaltungen des erfindungsgemäßen Schienenfahrzeugs sei auf die obigen Ausführungen im Zusammenhang mit dem erfindungsgemäßen Verfahren und dessen vorteilhafter Ausgestaltungen verwiesen.

Vorteilhaft ist es, wenn die Messeinrichtung in einen rohrförmigen Anbaustutzen einer Anbohrschelle eingeschraubt ist, dessen Außenwand eine Justiereinrichtung für ein zentriertes Aufsetzen einer Oberfräse, einer Adaptereinrichtung und/oder einer Oberfräsen-Adapter-Einheit bildet.

Die Erfindung wird nachfolgend anhand von Ausführungsbeispielen näher erläutert; dabei zeigen beispielhaft
- Figur 1: ein Ausführungsbeispiel für ein Schienenfahrzeug in Form eines Güterzugwaggons, der mit einem Druckluftbremssystem ausgestattet ist, in einer schematischen, nicht maßstabsgerechten Darstellung,
- Figuren 2-6: Verfahrensschritte zur Nachrüstung des Druckluftbremssystems des Güterzugwaggons gemäß Figur 1 im druckfreien Zustand mit Hilfe einer auf einer Anbohrschelle mittels einer Adaptereinrichtung aufgesetzten Oberfräse,
- Figur 7: ein Ausführungsbeispiel für eine bevorzugte Ausgestaltung einer Adaptereinrichtung für das Verfahren gemäß den Figuren 2 bis 6 in einer dreidimensionalen Darstellung schräg von der Seite, und
- Figur 8: ein Ausführungsbeispiel für ein Verfahren, bei dem eine Adaptereinrichtung in die Anbohrschelle ein-, also nicht aufgesetzt wird.

In den Figuren werden der Übersicht halber für identische oder vergleichbare Komponenten stets dieselben Bezugszeichen verwendet.

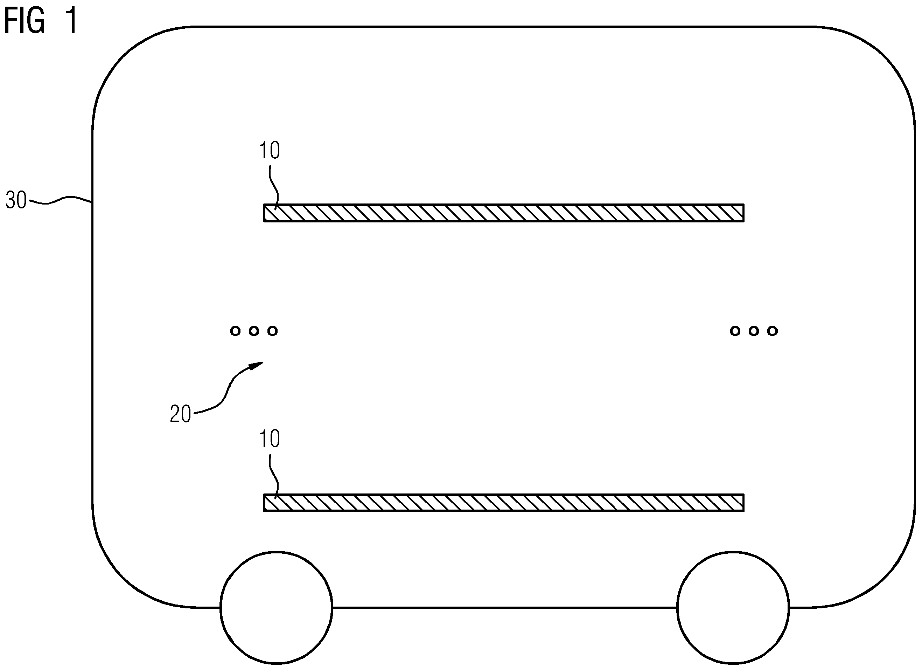

Die Figur 1 zeigt in einer schematischen, nicht maßstabsgerechten Darstellung einen Abschnitt eines Rohres einer Druckluftleitung 10, die einen Bestandteil eines nur angedeuteten und nicht weiter dargestellten Druckluftbremssystems 20 bildet. Das Druckluftbremssystem 20 ist in einem Schienenfahrzeug 30 installiert, bei dem es sich beispielsweise um einen Güterzugwaggon handeln kann.

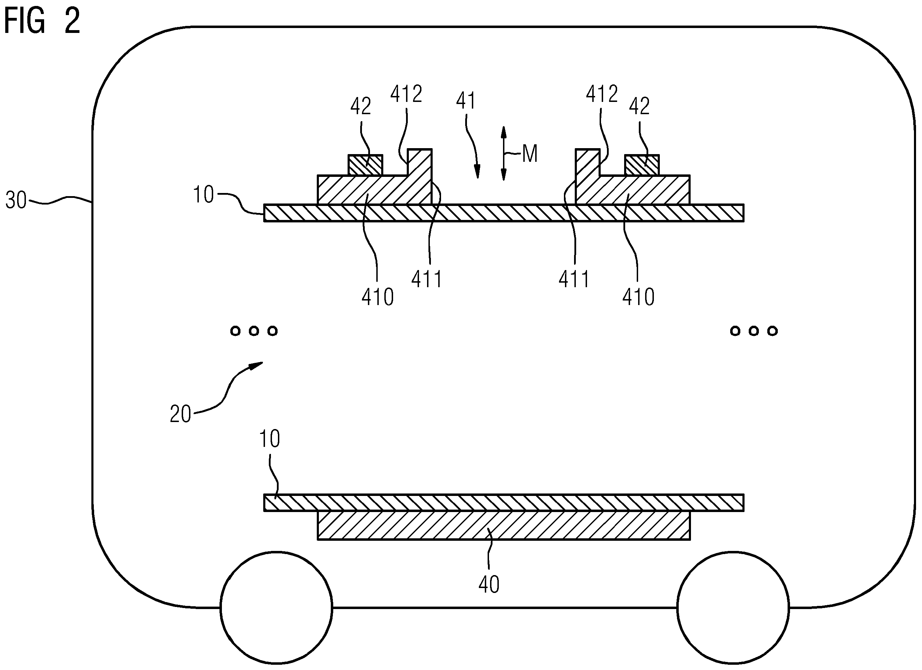

Im Zusammenhang mit den Figuren 2 bis 7 wird nachfolgend beispielhaft erläutert, wie das Druckluftbremssystem 20 nachträglich im druckfreien Zustand, also im abgestellten Zustand des Schienenfahrzeugs, mit einer zusätzlichen Luftdruckmesseinrichtung nachgerüstet werden kann. Dabei soll vermieden werden, dass im Rahmen des Nachrüstverfahrens Verunreinigungen, insbesondere Rohrmaterial der Druckluftleitung 10, durch Abrieb oder Splitterbildung ins Innere der Druckluftleitung 10 hineinfallen und das Druckluftbremssystem 20 beschädigen oder womöglich komplett außer Kraft setzen können.

Zunächst wird in einem ersten Verfahrensschritt mit Hilfe von beispielsweise vier Befestigungsschrauben 42 eine Anbohrschelle 40 an der Druckluftleitung 10 installiert, wie beispielhaft die Figur 2 im Querschnitt zeigt.

Die Anbohrschelle 40 gemäß Figur 2 weist einen Schellenabschnitt 400 auf, der an der Druckluftleitung 10 anliegt und vorzugsweise mit einer nicht gezeigten Dichtung gegenüber der Druckluftleitung 10 abgedichtet ist.

Darüber hinaus weist die Anbohrschelle 40 gemäß Figur 2 einen Schellenabschnitt in Form eines rohrförmigen Anbaustutzens 410 auf. Die Mittelachse M bzw. die Längsrichtung des rohrförmigen Anbaustutzens 410 erstreckt sich radial nach außen.

Eine Innenwand 411 des rohrförmigen Anbaustutzens 410 ist mit einem nicht weiter gezeigten Innengewinde versehen, das ein Einschrauben einer Komponente, wie beispielsweise einer Messeinrichtung, ermöglicht.

Der rohrförmige Anbaustutzen 410 bildet eine Öffnung 41, die einen Teilabschnitt der Druckluftleitung 10 freilässt und ein Ansetzen eines Rohrbearbeitungsgerätes auf der Druckluftleitung 10 ermöglicht.

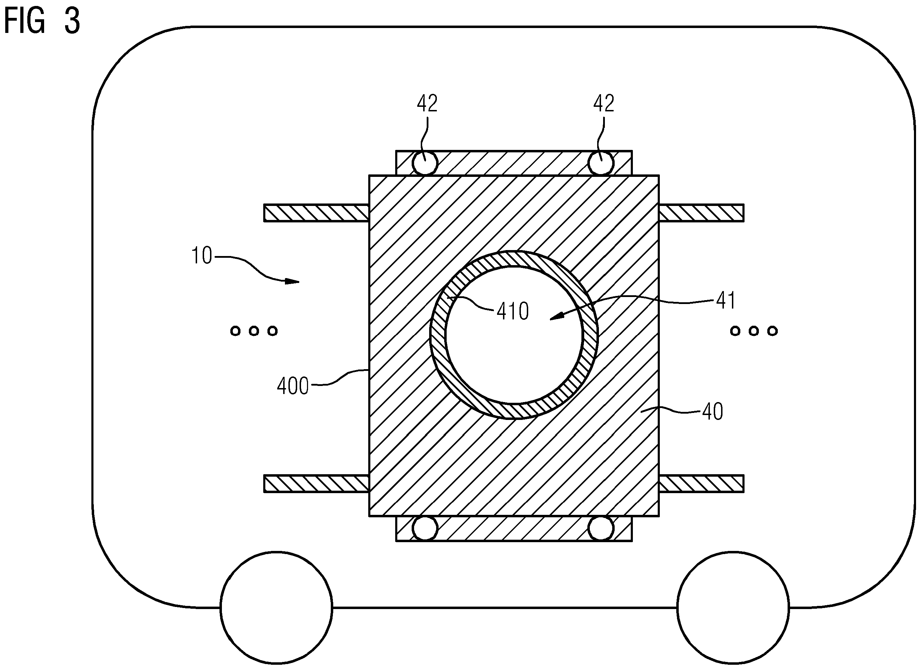

Die Figur 3 zeigt die Anbohrschelle 40 mit der Öffnung 41 in einer Draufsicht von oben; auch hier lässt sich erkennen, dass ein Materialbearbeitungsgerät auf die Öffnung 41 aufgesetzt werden kann, um ein Loch in das Rohr der Druckluftleitung 10 einzubringen. Darüber hinaus lassen sich die Befestigungsschrauben 42 erkennen, die ein Festziehen der Anbohrschelle 40 an der Druckluftleitung 10 erlauben.

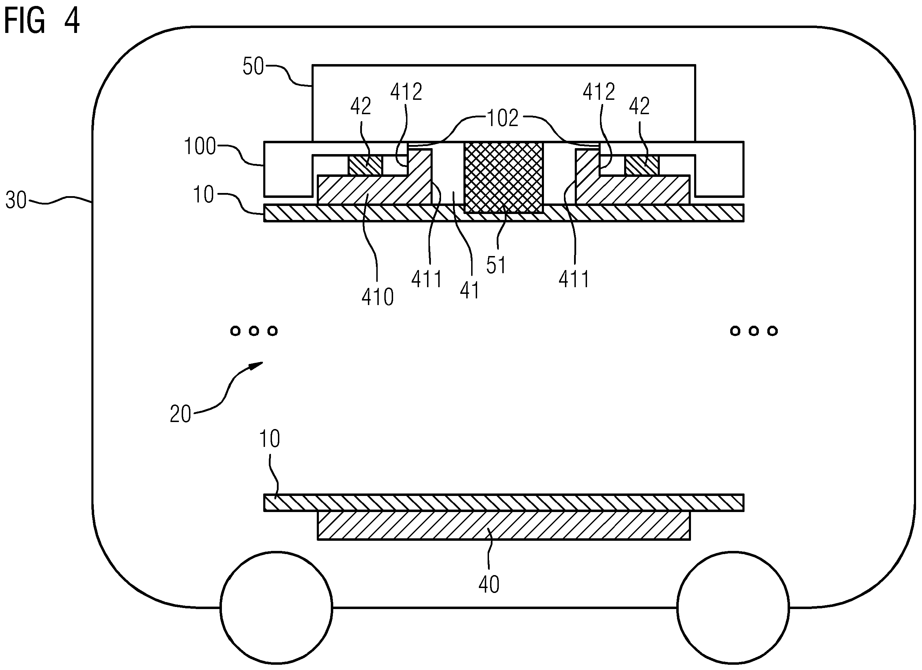

Die Figur 4 zeigt die Druckluftleitung 10 und die Anbohrschelle 40 nochmals in einem Querschnitt, nachdem eine Adaptereinrichtung 100 und als Materialbearbeitungsgerät eine transportable Oberfräse 50 manuell derart auf die Anbohrschelle 40 aufgesetzt wurde, dass ihr Fräskopf 51 unmittelbar auf der Druckluftleitung 10 aufliegt.

Die Adaptereinrichtung 100 wird mit der Oberfräse 50 vor dem Aufsetzen auf der Anbohrschelle 40 vorzugsweise fest verbunden, beispielsweise verschraubt, um eine vormontierte Oberfräsen-Adapter-Einheit zu bilden.

Man erkennt in der Figur 4, dass ein Durchgangsloch 102 der Adaptereinrichtung 100 an der Außenwand 412 des Anbaustutzens 410 anliegt und so die Oberfräsen-Adapter-Einheit in der Öffnung 41 bzw. relativ zum Anbaustutzen 410 zentriert. Gleichzeitig sorgt die Adaptereinrichtung 100 durch das Aufliegen auf den vier Befestigungsschrauben 42 für einen senkrechten oder zumindest näherungsweise senkrechten Fräsvorgang.

Wird die transportable Oberfräse 50 in Betrieb genommen und in einem Drehzahlbereich von über 10.000 Umdrehungen pro Minute betrieben, vorzugsweise mit einer Drehzahl über 30.000 Umdrehungen pro Minute, so wird ihr Fräskopf 51 bei nur leichtem manuellen Anpressdruck - wie erfinderseitig festgestellt wurde - bei einer Druckluftleitung 10 aus Metall, wie es im Bereich der Eisenbahntechnik bei Druckluftleitungen üblicherweise eingesetzt wird, keine Späne erzeugen und kein spanbehaftetes Bohrloch in die Druckluftleitung 10 einbringen, sondern stattdessen das Rohrmaterial der Druckluftleitung 10 aufschmelzen und dabei verdrängen, wodurch ein eingeschmolzenes Loch 60 in der Druckluftleitung 10 gebildet wird.

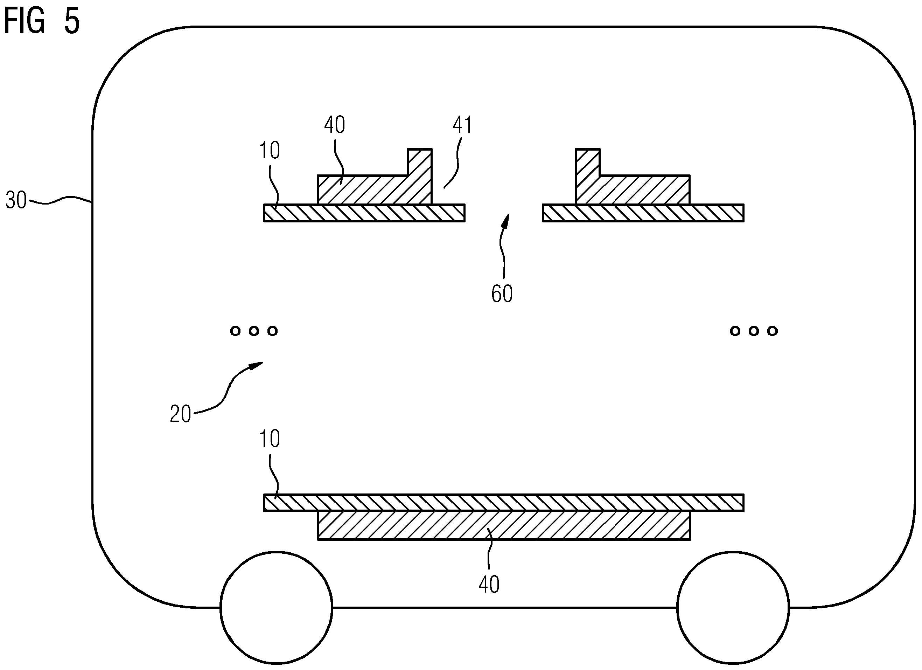

Die Figur 5 zeigt die Druckluftleitung 10, nachdem mittels der transportablen Oberfräse 50 gemäß Figur 4 das eingeschmolzene Loch 60 hergestellt worden ist.

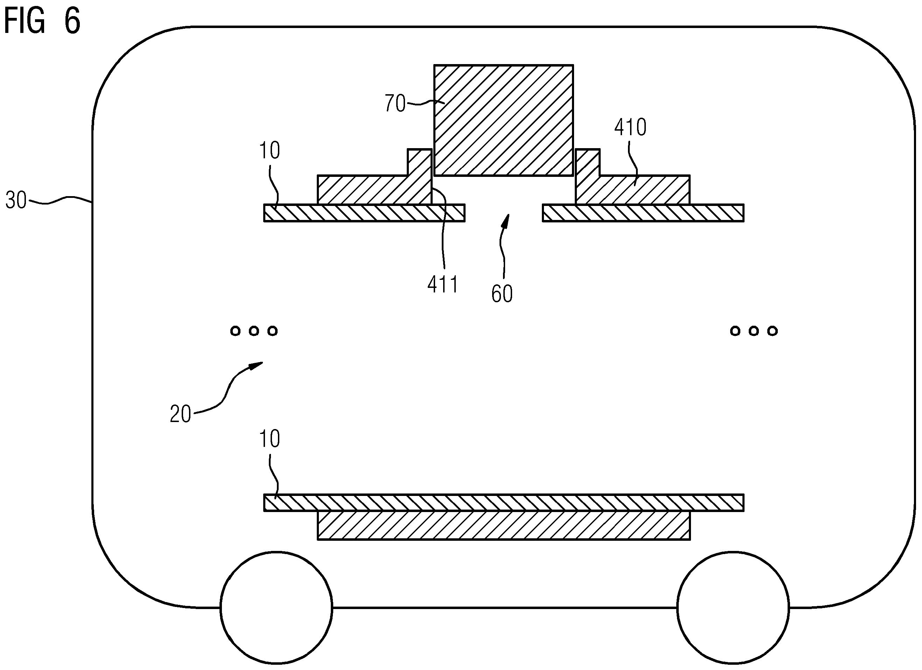

Nach dem Einschmelzen des Lochs 60 wird in den Anbaustutzen 410 eine Luftdruckmesseinrichtung 70 eingesetzt (vgl. Figur 6), indem diese mit ihrem nicht weiter gezeigten Außengewinde in das bereits erwähnte, ebenfalls nicht weiter gezeigte Innengewinde in der Innenwand 411 des rohrförmigen Anbaustutzens 410 eingeschraubt wird.

Es lässt sich erkennen, dass der Anbaustutzen 410 in vorteilhafter Weise eine Doppelfunktion ausübt: So dient er sowohl zum Aufsetzen und Ausrichten der Adaptereinrichtung 100 bzw. der Oberfräsen-Adapter-Einheit, wie im Zusammenhang mit den Figuren 2 bis 4 erläutert worden ist, als auch zur Aufnahme bzw. Montage der Messeinrichtung 70 durch Verschrauben mit der Innenwand 411, wie im Zusammenhang mit der Figur 6 erläutert worden ist.

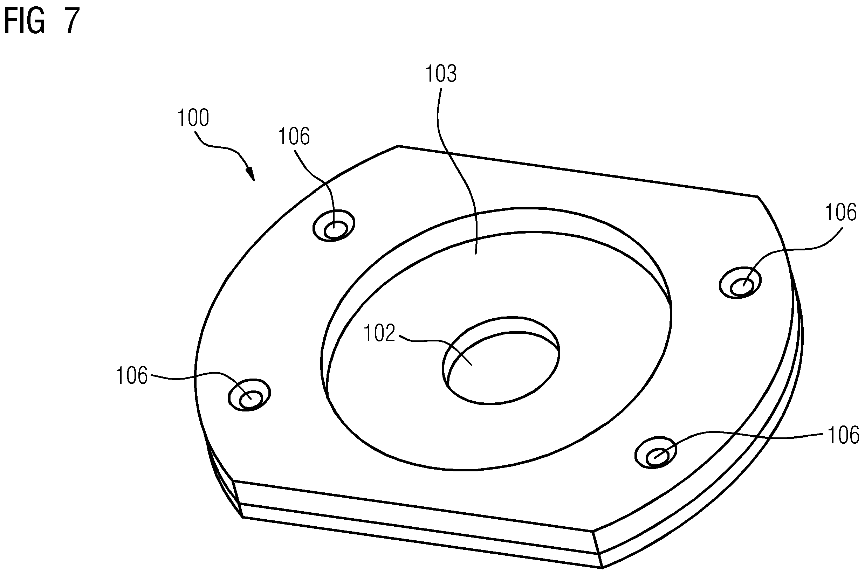

Die Figur 7 zeigt näher im Detail ein Ausführungsbeispiel für die Adaptereinrichtung 100, die vorzugsweise über zu einer Grundplatte der Oberfräse 50 passende Löcher 106 verfügt, die ein Anschrauben der Adaptereinrichtung 100 an der Grundplatte der Oberfräse 50 und somit die Bildung einer Oberfräsen-Adapter-Einheit ermöglichen, bevor diese gemeinsam auf den Anbaustutzen 410 aufgesetzt wird. Man erkennt insbesondere das Durchgangsloch 102, das zur Zentrierung bzw. Ausrichtung der Adaptereinrichtung 100 auf dem Anbaustutzen 410 der Anbohrschelle 40 dient.

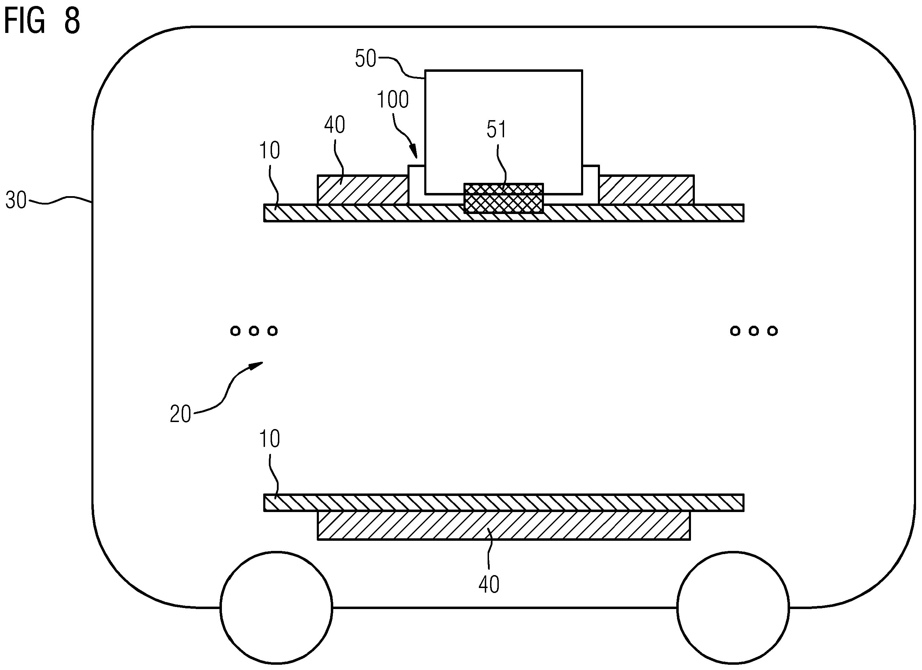

Bei dem Ausführungsbeispiel gemäß den Figuren 2 bis 7 wird die Adaptereinrichtung 100 an der Außenwand 412 des Anbaustutzens 410 der Anbohrschelle 40 ausgerichtet. Ist der Durchmesser der Öffnung 41 der Anbohrschelle 40 so groß, dass ein vorderes Teil der Oberfräse 50 in dieses hineinragen kann, so kann eine Adaptereinrichtung 100 auch in die Öffnung 41 der Anbohrschelle 40 eingesetzt werden, sodass sich deren Außenkontur an der Innenwand der Öffnung 41 ausrichtet. Eine solche alternative Ausgestaltung zeigt beispielhaft die Figur 8.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den durch die beigefügten Ansprüche definierten Schutzumfang der Erfindung zu verlassen.

### Bezugszeichenliste

- 10: Druckluftleitung
- 20: Druckluftbremssystem
- 30: Schienenfahrzeug
- 40: Anbohrschelle
- 41: Öffnung
- 42: Befestigungsschrauben
- 50: Oberfräse
- 51: Fräskopf
- 60: eingeschmolzenes Loch
- 70: Luftdruckmesseinrichtung
- 100: Adaptereinrichtung
- 102: Durchgangsloch für Zentrierung
- 106: Befestigungslöcher
- 400: Schellenabschnitt
- 410: Anbaustutzen
- 411: Innenwand
- 412: Außenwand

- M: Mittelachse

## Patentansprüche

1. Verfahren zum nachträglichen Anbringen einer Messeinrichtung (70) an einem Rohr einer Fluidleitung eines Fahrzeugs, insbesondere Schienenfahrzeugs (30),
**dadurch gekennzeichnet, dass**
- im Fahrzeug mit einem spanfreien Fließbohrverfahren durch Anschmelzen des Rohrmaterials des Rohres ein Loch (60) in das Rohr eingeschmolzen wird und
- die Messeinrichtung (70) an das eingeschmolzene Loch (60) angeschlossen wird.

2. Verfahren nach Anspruch 1,
**dadurch gekennzeichnet, dass**
zunächst eine Anbohrschelle (40) an dem im Fahrzeug befindlichen Rohr angebracht wird und das Fließbohrverfahren an der durch die Anbohrschelle (40) definierten Stelle durchgeführt wird.

3. Verfahren nach einem der voranstehenden Ansprüche,
**dadurch gekennzeichnet, dass**
die Fluidleitung eine Druckluftleitung (10) des Fahrzeugs ist und das Loch (60) in die Druckluftleitung (10) eingeschmolzen wird.

4. Verfahren nach einem der voranstehenden Ansprüche,
**dadurch gekennzeichnet, dass**
- die Fluidleitung eine Druckluftleitung (10) eines Druckluftbremssystems (20) des Fahrzeugs ist und
- als Messeinrichtung (70) eine Luftdruckmesseinrichtung an das Rohr angeschlossen wird, die beim Betrieb den Luftdruck des Druckluftbremssystems (20) misst.

5. Verfahren nach einem der voranstehenden Ansprüche,
**dadurch gekennzeichnet, dass**
das spanfreie Fließbohrverfahren mit einer transportablen Oberfräse (50) hergestellt wird, indem diese in einem Drehzahlbereich über 10.000 Umdrehungen pro Minute betrieben wird.

6. Verfahren nach einem der voranstehenden Ansprüche,
**dadurch gekennzeichnet, dass**
die Oberfräse (50) beim Betrieb ausschließlich manuell ohne zusätzliche Anpresseinrichtung auf das Rohr aufgedrückt wird.

7. Verfahren nach einem der voranstehenden Ansprüche,
**dadurch gekennzeichnet, dass**
zwischen der transportablen Oberfräse (50) und der Anbohrschelle (40) eine Adaptereinrichtung (100) angeordnet wird.

8. Verfahren nach Anspruch 7,
**dadurch gekennzeichnet, dass**
- die Adaptereinrichtung (100) an der transportablen Oberfräse (50) unter Bildung einer Oberfräsen-Adapter-Einheit montiert wird und
- die Oberfräsen-Adapter-Einheit auf die Anbohrschelle (40) aufgesetzt wird.

9. Verfahren nach Anspruch 8,
**dadurch gekennzeichnet, dass**
die Adaptereinrichtung (100) an der transportablen Oberfräse (50) unter Bildung der Oberfräsen-Adapter-Einheit montiert wird, indem Schrauben durch Löcher (106) in der Adaptereinrichtung (100) hindurchgeführt und in die Oberfräse (50) eingeschraubt werden.

10. Verfahren nach Anspruch 7,
**dadurch gekennzeichnet, dass**
- die Adaptereinrichtung (100) auf eine Öffnung (41) der Anbohrschelle (40) aufgesetzt wird und
- die Oberfräse (50) erst danach auf die Adaptereinrichtung (100) aufgesetzt wird, wobei ein Fräskopf (51) der Oberfräse (50) durch ein Durchgangsloch (102) der Adaptereinrichtung (100) hindurch geführt wird.

11. Verfahren nach einem der voranstehenden Ansprüche,
**dadurch gekennzeichnet, dass**
- die Anbohrschelle einen rohrförmigen Anbaustutzen umfasst, der eine Außenwand und eine Innenwand aufweist,
- die Adaptereinrichtung oder die Oberfräsen-Adapter-Einheit auf den Anbaustutzen aufgesetzt und dabei durch die Außenwand des Anbaustutzens zentriert wird und
- die Messeinrichtung nach dem Einschmelzen des Loches in ein Innengewinde in der Innenwand des rohrförmigen **An**baustutzens eingeschraubt **wird.**

12. Verfahren nach einem der voranstehenden Ansprüche,
**dadurch gekennzeichnet, dass**
- das Rohr ein Metallrohr ist und
- das Anschmelzen des Rohrmaterials in einem Güterzugwaggon durchgeführt **wird.**

13. Verfahren nach einem der voranstehenden Ansprüche,
**dadurch gekennzeichnet, dass**
das Anschmelzen des Rohrmaterials im druckfreien Zustand des Rohres durchgeführt **wird.**

14. Schienenfahrzeug (30) mit einer Fluidleitung, die ein Rohr aufweist, und einer Messeinrichtung,
**dadurch gekennzeichnet, dass**
die Messeinrichtung durch ein Verfahren nach einem der voranstehenden Ansprüche nachträglich an dem Rohr der Fluidleitung angebracht ist.

15. Schienenfahrzeug nach Anspruch 14,
**dadurch gekennzeichnet, dass**
die Messeinrichtung in einen rohrförmigen Anbaustutzen einer Anbohrschelle eingeschraubt ist, dessen Außenwand eine Justiereinrichtung für ein zentrierts Aufsetzen einer Oberfräse, einer Adaptereinrichtung und/oder einer Oberfräsen-Adapter-Einheit bildet.

## Claims

1. Method for retrofitting a measuring facility (70) on a tube of a fluid line of a vehicle, in particular a rail vehicle (30),
**characterised in that**
- in the vehicle, a hole (60) is melted into the tube with a non-cutting friction drilling process by melting the material of the tube, and
- the measuring facility (70) is connected to the melted-in hole (60).

2. Method according to claim 1,
**characterised in tha**t firstly a pipe boring clamp (40) is mounted on the tube situated in the vehicle and the friction drilling process is carried out at the site defined by the pipe boring clamp (40).

3. Method according to one of the preceding claims,
**characterised in that** the fluid line is a compressed air line (10) of the vehicle and the hole (60) is melted into the compressed air line (10).

4. Method according to one of the preceding claims,
c **h a r a c t e r i s e d i n t h a t**
- the fluid line is a compressed air line (10) of a compressed air braking system (20) of the vehicle, and
- an air pressure measuring facility is connected to the tube as a measuring facility (70) which, during operation, measures the air pressure of the compressed air braking system (20).

5. Method according to one of the preceding claims,
**characterised in that**
the non-cutting friction drilling process is created with a transportable routing machine (50) while said machine is operated in a rotary speed range of over 10,000 rotations per minute.

6. Method according to one of the preceding claims,
**characterised in that**
during operation, the routing machine (50) is pressed onto the tube exclusively manually without any additional pressing facility.

7. Method according to one of the preceding claims,
**characterised in that**
an adapter facility (100) is arranged between the transportable routing machine (50) and the pipe boring clamp (40).

8. Method according to claim 7,
c**haracterised in that**
- the adapter facility (100) is mounted on the transportable routing machine (50) forming a routing machine adapter unit, and
- the routing machine adapter unit is placed on the pipe boring clamp (40).

9. Method according to claim 8,
**characterised in that**
the adapter facility (100) is mounted on the transportable routing machine (50) forming the routing machine adapter unit by feeding screws through holes (106) in the adapter facility (100) and screwing them into the routing machine (50).

10. Method according to claim 7,
**characterised in that**
- the adapter facility (100) is placed on an opening (41) of the pipe boring clamp (40), and
- only thereafter is the routing machine (50) placed on the adapter facility (100), wherein a router head (51) of the routing machine (50) is guided through a through hole (102) of the adapter facility (100).

11. Method according to one of the preceding claims,
**characterised in that**
- the pipe boring clamp comprises a tubular attachment connecting piece which has an outer wall and an inner wall,
- the adapter facility or the routing machine adapter unit is placed on the attachment connecting piece and is therein centred by way of the outer wall of the attachment connecting piece, and
- after the melting-in of the hole, the measuring facility is screwed into an internal thread in the inner wall of the tubular attachment connecting piece.

12. Method according to one of the preceding claims,
**characterised in that**
- the tube is a metal tube, and
- the melting of the tube material is carried out in a goods wagon.

13. Method according to one of the preceding claims,
**characterised in that**
the melting of the tube material is carried out in the unpressurised state of the tube.

14. Rail vehicle (30) with a fluid line which has a tube, and a measuring facility,
**characterised in that**
the measuring facility is subsequently attached to the tube of the fluid line by way of a method according to one of the preceding claims.

15. Rail vehicle according to claim 14,
**characterised in that**
the measuring facility is screwed into a tubular attachment connecting piece of a pipe boring clamp, the outer wall of which forms an adjusting facility for a centred placement of a routing machine, an adapter facility and/or a routing machine adapter unit.

## Revendications

1. Procédé de montage ultérieur d'un dispositif (70) de mesure sur un tuyau d'un conduit pour du fluide d'un véhicule, en particulier d'un véhicule (30) ferroviaire,
**caractérisé en ce que**,
- dans le véhicule, par un procédé de perçage par friction sans copeau par fusion du matériau du tuyau, on fait par fusion un trou (60) dans le tuyau, et
- l'on raccorde le dispositif (70) de mesure au trou (60) obtenu par fusion.

2. Procédé suivant la revendication 1,
**caractérisé en ce que**
l'on monte d'abord une bride (40) d'amorçage sur le tuyau se trouvant dans le véhicule et on effectue le procédé de perçage par friction à l'endroit défini par la bride (40) d'amorçage.

3. Procédé suivant l'une des revendications précédentes,
**caractérisé en ce que**
le conduit pour du fluide est un conduit (10) pour de l'air comprimé du véhicule et on fait le trou (60) par fusion dans le conduit (10) pour de l'air comprimé.

4. Procédé suivant l'une des revendications précédentes,
**caractérisé en ce que**
- le conduit pour du fluide est un conduit (10) pour de l'air comprimé d'un système (20) de freinage à air comprimé du véhicule et
- comme dispositif (70) de mesure on raccorde au tuyau un dispositif de mesure de la pression de l'air, qui mesure, en fonctionnement, la pression de l'air du système (20) de freinage à air comprimé.

5. Procédé suivant l'une des revendications précédentes,
**caractérisé en ce que**
l'on exécute le procédé de perçage par friction sans copeau avec une défonceuse (50) transportable en la faisant fonctionner dans une plage de vitesse de rotation supérieure à 10 000 tours à la minute.

6. Procédé suivant l'une des revendications précédentes,
**caractérisé en ce que**
l'on applique la défonceuse (50), lors du fonctionnement, exclusivement manuellement sans dispositif supplémentaire d'application d'une pression au tuyau.

7. Procédé suivant l'une des revendications précédentes,
**caractérisé en ce que**
l'on monte un dispositif (100) adaptateur entre la défonceuse (50) transportable et la bride (40) d'amorçage.

8. Procédé suivant la revendication 7,
**caractérisé en ce que**
- l'on monte le dispositif (100) adaptateur sur la défonceuse (50) transportable en formant une unité défonceuse-adaptateur et
- l'on applique l'unité défonceuse-adaptateur à la bride (40) d'amorçage.

9. Procédé suivant la revendication 8,
**caractérisé en ce que**
l'on monte le dispositif (100) adaptateur sur la défonceuse (50) transportable avec formation de l'unité défonceuse-adaptateur en passant des vis dans des trous (106) du dispositif (100) adaptateur et en les vissant dans la défonceuse (50).

10. Procédé suivant la revendication 7,
**caractérisé en ce que**
- l'on applique le dispositif (100) adaptateur à une ouverture (41) de la bride (40) d'amorçage et
- l'on applique la défonceuse (50) seulement ensuite au dispositif (100) adaptateur, dans lequel une tête (51) de fraisage de la défonceuse (50) passe dans un trou (102) de passage du dispositif (100) adaptateur.

11. Procédé suivant l'une des revendications précédentes,
**caractérisé en ce que**
- la bride d'amorçage comprend un appui tubulaire rapporté, qui a une paroi extérieure et une paroi intérieure,
- l'on applique le dispositif adaptateur ou l'unité défonceuse-adaptateur à l'appui rapporté et on le centre ainsi par la paroi extérieure de l'appui rapporté et
- l'on visse le dispositif de mesure, après avoir produit le trou par fusion, dans un taraudage dans la paroi intérieure de l'appui rapporté tubulaire.

12. Procédé suivant l'une des revendications précédentes,
**caractérisé en ce que**
- le tuyau est un tuyau métallique et
- l'on effectue la fusion du matériau tubulaire dans un wagon de train de marchandise.

13. Procédé suivant l'une des revendications précédentes,
**caractérisé en ce que**
l'on effectue la fusion du matériau tubulaire à l'état sans pression du tuyau.

14. Véhicule (30) ferroviaire comprenant un conduit pour du fluide, qui a un tuyau et un dispositif de mesure,
**caractérisé en ce que**
le dispositif de mesure est monté ultérieurement sur le tuyau de conduit pour du fluide par un procédé suivant l'une des revendications précédentes.

15. Véhicule ferroviaire suivant la revendication 14,
**caractérisé en ce que**
le dispositif de mesure est vissé dans un appui tubulaire rapporté d'une bride d'amorçage, dont la paroi extérieure forme un dispositif d'ajustement pour une application centrée d'une défonceuse, un dispositif adaptateur et/ou une unité défonceuse-adaptateur.
